# EUROPEAN PATENT SPECIFICATION

(11) **EP 4 337 830 B1**
(45) Date of publication and mention of the grant of the patent: **30.10.2024**
(21) Application number: 21736361.3
(22) Date of filing: 13.05.2021
(51) Int. Cl.: E02F 3/22, E02D 17/13, E02F 3/413, E02F 9/22, F16L 11/04, F16L 11/08, B66C 3/16

(54) **GRAB BUCKET EXCAVATOR**
BAGGER MIT GREIFER
PELLE EXCAVATRICE À BENNE PRENEUSE

(43) Date of publication of application: 20.03.2024
(73) Proprietor: I.M.M. Hydraulics S.p.A., 66041 Atessa (CH) (IT)
(72) Inventor: VIZZARRI, Domenico, 66041 Atessa (CH) (IT)
(74) Representative: Studio Torta S.p.A.
(86) International application number: PCT/IB2021/054088
(87) International publication number: WO 2022/238735

(56) References cited:
- EP-A1- 1 950 353
- CN-U- 207 079 189
- GB-A- 1 186 089
- US-A- 4 850 395
- US-A1- 2017 184 246

## Description

### TECHNICAL FIELD

The present innovation relates to a grab bucket excavator.

In particular, the present innovation relates to a grab bucket excavator of the type comprising a self-propelled vehicle, for example a tracked self-propelled vehicle; a grab bucket comprising, in turn, two shovels movable with respect to each other between an open position and a closed position; a lifting device fitted on the self-propelled vehicle for lowering and lifting the grab bucket; and a hydraulic drive device for moving the shovels between the open position and the closed position.

### BACKGROUND ART

Generally, the lifting device comprises a pair of pulling ropes, which are hooked on one side onto the bucket and on the other side onto respective winding rollers fitted on the self-propelled vehicle, and are wound around at least two return pulleys fitted at a free upper end of an upright extending upwards from the self-propelled vehicle.

The hydraulic drive device normally comprises at least one actuator cylinder connected to the shovels and at least one flexible pipe, which supplies a fluid under pressure to the actuator cylinder, and is hooked on one side onto the actuator cylinder and on the other side onto a winding roller fitted on the self-propelled vehicle.

Since the known grab bucket excavators of the type described above are used for making perforations having a relatively high depth, the flexible pipe has, inside the perforation, a relatively long length subjected to a relatively high axial traction force generated by the grab bucket and by the winding roller of the flexible pipe.

The known grab bucket excavators of the type described above have some drawbacks mainly deriving from the fact that the flexible pipes currently used have a relatively high radial resistance to the fluid under pressure but a relatively reduced axial resistance to the traction.

### DISCLOSURE OF INVENTION

The object of the present innovation is to provide a grab bucket excavator which is exempt from the drawbacks described above and which is simple and cost-effective to manufacture.

According to the present innovation, a grab bucket excavator is provided as claimed in the appended claims.

### BRIEF DESCRIPTION OF THE DRAWINGS

The present innovation will now be described with reference to the accompanying drawings, which illustrate a non-limiting embodiment example thereof, wherein:
Figure 1 is a schematic perspective view, with parts removed for clarity, of a preferred embodiment of the grab bucket excavator of the present innovation; and
Figure 2 is a sectional schematic view of a detail of the grab bucket excavator of Figure 1.

### BEST MODE FOR CARRYING OUT THE INVENTION

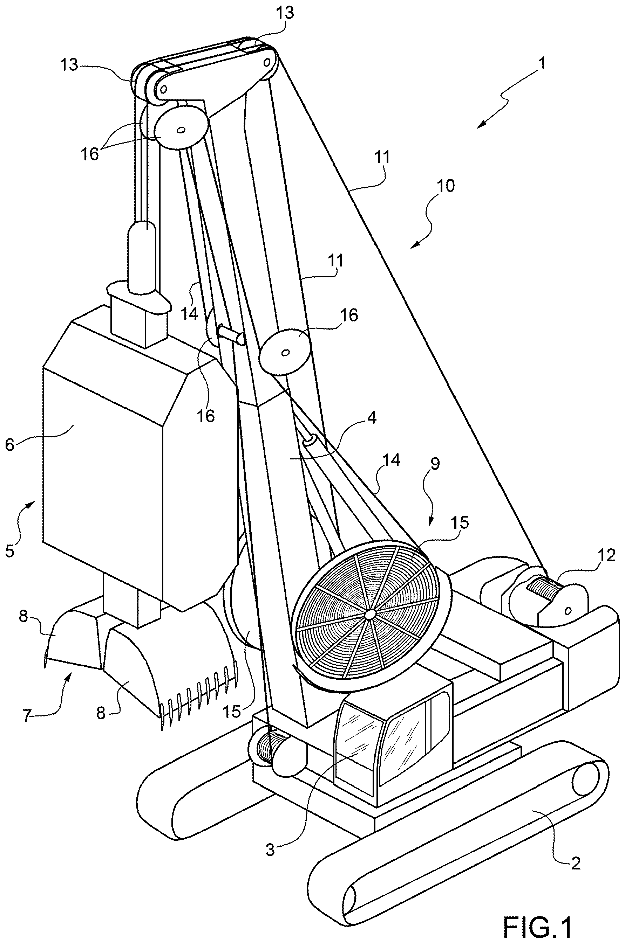

With reference to Figure 1, reference numeral 1 indicates, as a whole, a grab bucket excavator comprising a self-propelled vehicle 2, in this case a tracked vehicle, provided with an operator cab 3 and with an upright 4 extending upwards from the self-propelled vehicle 2.

The excavator 1 further has a perforation device 5 comprising a supporting frame 6 and a bucket 7 provided with two shovels 8 rotatably coupled to the frame 6 for rotating, with respect to the frame 6 and under the thrust of a hydraulic drive device 9, between an open position (Figure 1) and a closed position (not illustrated).

The excavator 1 is further provided with a lifting device 10 for lifting and lowering the device 5.

The device 10 comprises, in this case, two pulling ropes 11, which are hooked on one side onto the frame 6 and on the other side onto respective winding rollers 12 fitted on the vehicle 2, and are wound around at least two return pulleys 13 fitted at a free upper end of the upright 4.

The device 9 comprises at least one known and not shown actuator cylinder, which is fixed to the frame 6, has an output rod connected to the shovels 8, and is operated by a fluid under pressure supplied along a pair of flexible pipes 14, which are connected on one side to the actuator cylinder (not illustrated) and on the other side to respective winding rollers 15 fitted on the vehicle 2, and are wound around respective return pulleys 16 fitted along and at the free upper end of the upright 4.

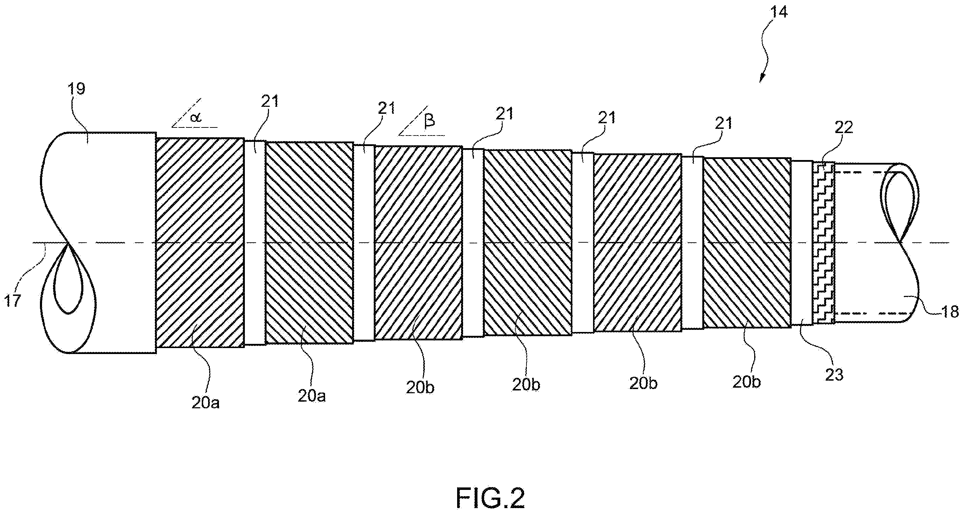

According to what illustrated in Figure 2, each pipe 14 has a longitudinal axis 17, and comprises, in this case:
an inner tube 18, which is made of polymeric material, is designed to ensure the seal of the pipe 14 to the fluid under pressure, and has an inner diameter comprised between 5 mm and 105 mm;
an outer tube 19, which is made of polymeric material, and is designed to protect the pipe 14 from the atmospheric agents, from the abrasion, and from the attack of chemical substances; e
six reinforcement layers 20, which are interposed between the inner tube 18 and the outer tube 19, overlap each other, and each one comprises a respective plurality of wires made of metallic material.

The layers 20 are helically wound around the axis 17 in an alternated manner in two windup directions opposite to each other.

The two layers 20 (in the following indicated by 20a) adjacent the outer tube 19 are wound around the axis 17 with respective windup angles α, which are comprised between 36° and 54°, in particular are equal to 45°, and are equal to or differ from each other.

The remaining four layers 20 (in the following indicated by 20b) are wound around the axis 17 with respective windup angles β, which are comprised between 48° and 62°, in particular are equal to 54°44', are equal to or differ from each other, and differ from the angles α.

With regard to what described above, it should be specified that:
when the angles α are equal to each other and the angles β are equal to each other, the difference between the angles α and the angles β is comprised between 2° and 15°;
when the angles α differ from each other and the angles β differ from each other, the difference between the greatest angle α and the smallest angle β is comprised between 2° and 15°.

The pipe 14 further comprises a plurality of intermediate layers 21, each of which is interposed between two adjacent layers 20 for ensuring the adhesion between the layers 20, and is made of polymeric material.

The pipe 14 further has a consolidation layer 22, which is made of textile material, and is fitted on the tube 18 for ensuring a relatively high resistance to the tube 18 both during the manufacturing of the pipe 14, and at the coupling zone of the pipe 14 to the actuator cylinder (not illustrated).

The pipe 14 further comprises a further intermediate layer 23, which is totally analogous to the layers 21, and is interposed between the layer 22 and the adjacent layer 20b so as to ensure the adhesion between the layer 22 and the layer 20b.

Of course, the inner tube 18, the outer tube 19, the reinforcement layers 20, the intermediate layers 21, 23, and the consolidation layer 22 have a length equal to a length of the pipe 14.

According to some variants not illustrated, the number of layers 20b is different from four, for example equal to six or eight.

The excavator 1 has some advantages mainly deriving from the fact that the layers 20b of each pipe 14 cooperate with the relative tube 18 for ensuring to the pipe 14 a relatively high radial resistance to the fluid under pressure and that the layers 20a ensure to the pipe 14 a relatively high flexibility, elasticity and, thus, an axial resistance to the traction.

The axial resistance to the traction of the pipes 14 is further improved by the difference of at least 2° existing between the angles α and the angles β.

## Claims

1. A grab bucket excavator comprising a self-propelled vehicle (2); a grab bucket (7) comprising, in turn, two shovels (8) movable with respect to each other between an open position and a closed position; a lifting device (10) fitted on the self-propelled vehicle (2) for lowering and lifting the grab bucket (7); and a hydraulic drive device (9) for moving the shovels (8) between the open position and the closed position; the hydraulic drive device (9) comprising at least one actuator cylinder connected to the shovels (8), at least one flexible pipe (14) for supplying a fluid under pressure to the actuator cylinder, and, for each flexible pipe (14), a respective winding roller (15) fitted on the self-propelled vehicle (2); and **characterised in that** the flexible pipe (14) comprises an inner tube (18); an outer tube (19); at least six reinforcement layers (20), which are interposed between the inner tube (18) and the outer tube (19), and are helically wound around a longitudinal axis (17) of the flexible pipe (14) in an alternated manner in two windup directions opposite to each other; and a plurality of intermediate layers (21), each one interposed between two respective adjacent reinforcement layers (20) for ensuring the adhesion between the reinforcement layers (20); the two reinforcement layers (20a) adjacent to the outer tube (19) being wound around the longitudinal axis (17) with respective first windup angles (α) and the remaining reinforcement layers (20b) being wound around the longitudinal axis (17) with respective second windup angles (β) differing from the first windup angles (α).

2. The grab bucket excavator according to claim 1, wherein each first windup angle (α) is comprised between 36° and 54°, in particular equal to 45°.

3. The grab bucket excavator according to claim 1 or 2, wherein each second windup angle (β) is comprised between 48° and 62°, in particular equal to 54°44'.

4. The grab bucket excavator according to any one of the preceding claims, wherein the first windup angles (α) are equal to each other or differ from each other.

5. The grab bucket excavator according to any one of the preceding claims, wherein the second windup angles (β) are equal to each other or differ from each other.

6. The grab bucket excavator according to any one of the preceding claims, wherein the first windup angles (α) are equal to each other, the second windup angles (β) are equal to each other, and the difference between the first windup angles (α) and the second windup angles (β) is comprised between 2° and 15°.

7. The grab bucket excavator according to any one of the preceding claims from 1 to 5, wherein the first windup angles (α) differ from each other, the second windup angles (β) differ from each other, and the difference between the greatest of the first windup angles (α) and the smallest of the second windup angles (β) is comprised between 2° and 15°.

8. The grab bucket excavator according to any one of the preceding claims, wherein the inner tube (18) and the outer tube (19) are made of polymeric material.

9. The grab bucket excavator according to any one of the preceding claims, wherein the intermediate layers (21) are made of polymeric material.

10. The grab bucket excavator according to any one of the preceding claims, wherein each reinforcement layer (20) comprises a plurality of wires made of metallic material.

11. The grab bucket excavator according to any one of the preceding claims, wherein the flexible pipe (14) further comprises a consolidation layer (22) made of textile material and fitted on the inner tube (18).

12. The grab bucket excavator according to claim 11, wherein the flexible pipe (14) further comprises a further intermediate layer (23) interposed between the consolidation layer (22) and the adjacent reinforcement layer (20b).

## Patentansprüche

1. Greifbagger umfassend ein selbstfahrendes Fahrzeug (2); einen Greifkorb (7), der seinerseits zwei Schaufeln (8) umfasst, die zwischen einer offenen und einer geschlossenen Stellung zueinander beweglich sind; einer Hebevorrichtung (10), die an dem selbstfahrenden Fahrzeug (2) zum Absenken und Anheben des Greifkorbes (7) eingebaut ist; und eine hydraulische Antriebsvorrichtung (9) zum Bewegen der Schaufeln (8) zwischen der offenen und der geschlossenen Stellung; wobei die hydraulische Antriebsvorrichtung (9) mindestens einen mit den Schaufeln (8) verbundenen Betätigungszylinder, mindestens ein flexibles Rohr (14) zum Zuführen eines Fluids unter Druck zu dem Betätigungszylinder und für jedes flexible Rohr (14) eine entsprechende Wickelrolle (15) umfasst, die an dem selbstfahrenden Fahrzeug (2) eingebaut ist; und **dadurch gekennzeichnet, dass** das flexible Rohr (14) ein Innenrohr (18), ein Außenrohr (19); mindestens sechs Verstärkungsschichten (20), die zwischen dem Innenrohr (18) und dem Außenrohr (19) angeordnet sind und schraubenförmig um eine Längsachse (17) des flexiblen Rohrs (14) in abwechselnder Weise in zwei einander entgegengesetzten Aufwicklungsrichtungen gewickelt sind; und eine Mehrzahl von Zwischenschichten (21) umfasst, die jeweils zwischen zwei jeweiligen angrenzenden Verstärkungsschichten (20) angeordnet sind, um die Haftung zwischen den Verstärkungsschichten (20) sicherzustellen; wobei die beiden an das Außenrohr (19) angrenzenden Verstärkungsschichten (20a) mit jeweiligen ersten Aufwicklungswinkeln (α) um die Längsachse (17) gewickelt sind und die übrigen Verstärkungsschichten (20b) mit jeweiligen zweiten Aufwicklungswinkeln (β), die sich von den ersten Aufwicklungswinkeln (α) unterscheiden, um die Längsachse (17) gewickelt sind.

2. Greifbagger nach Anspruch 1, wobei jeder erste Aufwicklungswinkel (α) zwischen 36° und 54° liegt, insbesondere gleich 45° ist.

3. Greifbagger nach Anspruch 1 oder 2, wobei jeder zweite Aufwicklungswinkel (β) zwischen 48° und 62° liegt, insbesondere gleich 54°44'ist.

4. Greifbagger nach einem der vorhergehenden Ansprüche, wobei die ersten Aufwicklungswinkel (α) gleich miteinander sind oder verschieden voneinander sind.

5. Greifbagger nach einem der vorhergehenden Ansprüche, wobei die zweiten Aufwicklungswinkel (β) gleich miteinander sind oder verschieden voneinander sind.

6. Greifbagger nach einem der vorhergehenden Ansprüche, wobei die ersten Aufwicklungswinkel (α) gleich miteinander sind, die zweiten Aufwicklungswinkel (β) gleich miteinander sind und der Unterschied zwischen den ersten Aufwicklungswinkeln (α) und den zweiten Aufwicklungswinkeln (β) zwischen 2° und 15° liegt.

7. Greifbagger nach einem der vorhergehenden Ansprüche 1 bis 5, wobei sich die ersten Aufwicklungswinkel (α) voneinander unterscheiden, sich die zweiten Aufwicklungswinkel (β) voneinander unterscheiden und der Unterschied zwischen dem größten der ersten Aufwicklungswinkel (α) und dem kleinsten der zweiten Aufwicklungswinkel (β) zwischen 2° und 15° liegt.

8. Greifbagger nach einem der vorhergehenden Ansprüche, wobei das Innenrohr (18) und das Außenrohr (19) aus einem Polymerwerkstoff bestehen.

9. Greifbagger nach einem der vorhergehenden Ansprüche, wobei die Zwischenschichten (21) aus Polymerwerkstoff bestehen.

10. Greifbagger nach einem der vorhergehenden Ansprüche, wobei jede Verstärkungsschicht (20) eine Mehrzahl von Drähten aus Metallwerkstoff umfasst.

11. Greifbagger nach einem der vorhergehenden Ansprüche, wobei das flexible Rohr (14) ferner eine auf dem Innenrohr (18) eingebaute Verfestigungsschicht (22) umfasst, die aus Textilwerkstoff besteht.

12. Greifbagger nach Anspruch 11, wobei das flexible Rohr (14) ferner eine weitere Zwischenschicht (23) umfasst, die zwischen der Verfestigungsschicht (22) und der angrenzenden Verstärkungsschicht (20b) angeordnet ist.

## Revendications

1. Excavateur à benne preneuse comprenant un véhicule automoteur (2) ; une benne preneuse (7) comprenant, à son tour, deux pelles (8) mobiles l'une par rapport à l'autre entre une position ouverte et une position fermée ; un dispositif de levage (10) monté sur le véhicule automoteur (2) pour abaisser et soulever la benne preneuse (7) ; et un dispositif d'entraînement hydraulique (9) pour déplacer les pelles (8) entre la position ouverte et la position fermée ; le dispositif d'entraînement hydraulique (9) comprenant au moins un cylindre actionneur relié aux pelles (8), au moins un tuyau flexible (14) pour alimenter le cylindre actionneur en fluide sous pression, et, pour chaque tuyau flexible (14), un rouleau enrouleur respectif (15) monté sur le véhicule automoteur (2) ; et **caractérisé en ce que** le tuyau flexible (14) comprend un tube intérieur (18) ; un tube extérieur (19) ; au moins six couches de renforcement (20), qui sont interposées entre le tube intérieur (18) et le tube extérieur (19), et qui sont enroulées en hélice autour d'un axe longitudinal (17) du tuyau flexible (14) de manière alternée dans deux directions d'enroulement opposées l'une à l'autre ; et plusieurs couches intermédiaires (21), chacune interposée entre deux couches de renforcement adjacentes respectives (20) pour assurer l'adhérence entre les couches de renforcement (20) ; les deux couches de renforcement (20a) adjacentes au tube extérieur (19) étant enroulées autour de l'axe longitudinal (17) avec des premiers angles d'enroulement (α) respectifs et les autres couches de renforcement (20b) étant enroulées autour de l'axe longitudinal (17) avec des deuxièmes angles d'enroulement (β) respectifs différents des premiers angles d'enroulement (α).

2. Excavateur à benne preneuse selon la revendication 1, dans lequel chaque premier angle d'enroulement (α) est compris entre 36° et 54°, en particulier égal à 45°.

3. Excavateur à benne preneuse selon la revendication 1 ou 2, dans lequel chaque deuxième angle d'enroulement (β) est compris entre 48° et 62°, en particulier égal à 54°44'.

4. Excavateur à benne preneuse selon l'une quelconque des revendications précédentes, dans lequel les premiers angles d'enroulement (α) sont égaux entre eux ou différents les uns des autres.

5. Excavateur à benne preneuse selon l'une quelconque des revendications précédentes, dans lequel les deuxièmes angles d'enroulement (β) sont égaux entre eux ou différents les uns des autres.

6. Excavateur à benne preneuse selon l'une quelconque des revendications précédentes, dans lequel les premiers angles d'enroulement (α) sont égaux entre eux, les deuxièmes angles d'enroulement (β) sont égaux entre eux, et la différence entre les premiers angles d'enroulement (α) et les deuxièmes angles d'enroulement (β) est comprise entre 2° et 15°.

7. Excavateur à benne preneuse selon l'une quelconque des revendications précédentes de 1 à 5, dans lequel les premiers angles d'enroulement (α) diffèrent les uns des autres, les deuxièmes angles d'enroulement (β) diffèrent les uns des autres, et la différence entre le plus grand des premiers angles d'enroulement (α) et le plus petit des deuxièmes angles d'enroulement (β) est comprise entre 2° et 15°.

8. Excavateur à benne preneuse selon l'une quelconque des revendications précédentes, dans lequel le tube intérieur (18) et le tube extérieur (19) sont en matériau polymère.

9. Excavateur à benne preneuse selon l'une quelconque des revendications précédentes, dans lequel les couches intermédiaires (21) sont en matériau polymère.

10. Excavateur à benne preneuse selon l'une quelconque des revendications précédentes, dans lequel chaque couche de renforcement (20) comprend une pluralité de fils en matériau métallique.

11. Excavateur à benne preneuse selon l'une quelconque des revendications précédentes, dans laquelle le tuyau flexible (14) comprend en outre une couche de consolidation (22) en matériau textile et fixée sur le tube intérieur (18)

12. Excavateur à benne preneuse selon la revendication 11, dans lequel le tuyau flexible (14) comprend en outre une autre couche intermédiaire (23) interposée entre la couche de consolidation (22) et la couche de renforcement adjacente (20b).
